# EUROPEAN PATENT APPLICATION

(11) **EP 4 851 432 A1**
(43) Date of publication of application: **09.12.2026**
(21) Application number: 26176431.0
(22) Date of filing: 05.05.2026
(51) Int. Cl.: F01D 25/26, F01D 25/24, F04D 29/52, F04D 29/64

(54) **MULTI-STAGE AXIAL COMPRESSOR AND METHOD OF ASSEMBLY THEREOF**

(30) Priority: 03.06.2025 GB 202508673
(71) Applicant: Rolls-Royce plc, London N1 9FX (GB)
(72) Inventor: Coles, David R, Derby, DE24 8BJ (GB)
(74) Representative: Rolls-Royce plc

(57) **Abstract**

A multi-stage axial compressor comprises a first rotor portion and a second rotor portion. A stator ring is axially located between the first rotor portion and the second rotor portion. Stator segments are placed between rotor stages, with first and second casings surrounding the respective first rotor portion its stators and the second rotor portion and its stators. The first casing, second casing and circumferential support ring are mechanically coupled together. A method of assembling the multi-stage axial compressor is also disclosed.

## Description

### FIELD

This disclosure relates to a multi-stage axial compressor, and in particular, a multi-stage axial compressor that comprises a reduced number of flanges.

### BACKGROUND

It is desirable to reduce the mass of a gas turbine engine to be used for aviation, as additional engine mass decreases the payload (for example, passengers, freight) that the airframe to which the gas turbine engine is fitted can carry.

Flanges which join adjacent components of a gas turbine engine, may disproportionately add to the mass of the gas turbine engine, as the diameter of a flange is greater than the diameter of a feature such as a casing to which the flange is connected. Furthermore, mechanical fixings such as bolts which join adjacent flanges, further increase the mass of the gas turbine engine.

Flanges may also adversely affect running clearances of gas turbine engine components under transient engine operating conditions, as the additional mass of the flange may increase thermal inertia, slowing the rate of thermal expansion and/or thermal contraction.

Reducing the number of flanges in an axial compressor may also simplify the ease of assembly and/or disassembly of the gas turbine engine.

### SUMMARY

According to a first aspect there is disclosed a multi-stage axial compressor.

The multi-stage axial compressor comprises a first rotor portion comprising at least two rotor stages. The multi-stage axial compressor also comprises a second rotor portion that also has at least two rotor stages. The second rotor portion and first rotor portion are coupled together. A stator ring is axially located between the rotor stages of the first rotor portion and the second rotor portion. The stator ring has a circumferential liner, a circumferential stator vane ring and a circumferential support ring that is radially outboard of the circumferential stator vane ring.

A plurality of first stator segments are located between the rotor stages of the first rotor portion whose tip portions are not surrounded the circumferential liner of the stator ring. A plurality of second stator segments are located between the rotor stages of the second rotor portion.

A first casing surrounds the first rotor portion and first stator segments. The first casing has a first location feature that interfaces with a first location feature of the circumferential support ring. A second casing surrounds the second rotor portion and second stator segments. The second casing has a second location feature that interfaces with a second location feature of the circumferential support ring.

The first casing, second casing and circumferential support ring are mechanically coupled together.

The first stator segments may comprise a multi-stage arrangement of successive stator stages, in which adjacent stator stages of the first stator segments are interconnected by a first rotor tip liner segment that is configured to surround a tip portion of a rotor stage of the first rotor portion that is axially bounded by the adjacent stator stages.

The second stator segments may comprise a multi-stage arrangement of successive stator stages, wherein adjacent stator stages of the second stator segment are interconnected by a second rotor tip liner segment that is configured to surround a tip portion of a rotor stage of the second rotor portion that is axially bounded by the adjacent stator stages.

A first sealing strip may be located between circumferentially-adjacent first stator segments.

A second sealing strip may be located between circumferentially-adjacent second stator segments.

End portions of the first stator segments and/ or second stator segments may comprise edge surfaces lying in a plane that is angled relative to a radial plane of the multi-stage axial compressor.

The first rotor portion and the second rotor portion may be coupled by a spline coupling or a curvic coupling.

The first casing, circumferential support ring and second casing may comprise aligned flanges, the first casing circumferential support ring and second casing being connected by a bolting arrangement through the aligned flanges. The aligned flanges may be radially-aligned.

A thickness of the first casing may undulate along an axial extent of the first casing. A thickness of the first casing may undulate along a circumferential extent of the first casing.

A thickness of the second casing may undulate along an axial extent of the second casing.

A thickness of the second casing may undulate along a circumferential extent of the second casing. The undulations may improve the thermal response of the first and/or second casing under transient engine operating conditions. Transient engine operating condition may be defined as conditions in which the engine is either accelerated from a lower power setting to a higher power setting or decelerated from a higher power setting to a lower power setting. **In** these conditions, components of the gas turbine engine may not be in thermal equilibrium, causing running clearances between adjacent gas turbine engine components to alter, depending upon the respective thermal inertias of the adjacent gas turbine engine components and/or the material from which they are made.

If present, the undulations of the first casing and/or second casing may be formed by an additive manufacturing process. If present the undulations may be formed from at casting, spin casting, centrifugal casting or machined from solid or a combination of the aforementioned manufacturing methods.

The multi-stage axial compressor may be a multi-stage axial compressor of a gas turbine engine. The gas turbine engine may be an aero gas turbine engine - i.e., it may be fitted to an aircraft.

According to a second aspect, there is disclosed a method of assembling a multi-stage axial compressor according to the first aspect. The method comprises: -

Providing a first rotor portion, the first rotor portion comprising at least two rotor stages.

Placing a stator ring adjacent to the first rotor portion.

Connecting a second rotor portion to the first rotor portion, the stator ring being positioned axially between the first rotor portion and the second rotor portion.

Placing a plurality of first stator segments between rotor stages of the first rotor portion.

Placing a plurality of second stator segments between rotor stages of the second rotor portion.

Sliding a first casing over the first rotor portion and first stator segments such that a first location feature of the first casing interfaces with a first location feature of the circumferential support ring of the stator ring.

Sliding a second casing over the second rotor portion and second stator segments such that a location of the second casing interfaces with a second location feature of the circumferential support ring of the stator ring.

Mechanically coupling the first casing, circumferential support ring and second casing.

Optionally, before the first casing and/or second casing are slid over their respective rotor portions and stator segments, undulations may be formed on these casings via an additive manufacturing process. Use of an additive manufacturing process in this way may be advantageous as it permits existing casings to be reworked to a new geometry rather than requiring new casings to this new geometry to be procured. This may, for example, enable a more rapid iteration of engine building and testing during engine development.

### BRIEF DESCRIPTION OF THE DRAWINGS

Embodiments will now be described by way of example only with reference to the accompanying FIGS, in which:
**FIG. 1** shows an example gas turbine engine;
**FIG. 2** shows an example compressor of a gas turbine engine;
**FIG. 3****.** shows an example compressor casing comprising undulations;
**FIG. 4** shows another example compressor casing comprising undulations;
**FIG. 5** shows a method of assembling a compressor of a gas turbine engine;
**FIG. 6** shows a stage in assembling a compressor of a gas turbine engine;
**FIG. 7** shows another stage in assembling a compressor of a gas turbine engine;
**FIG. 8** shows another stage in assembling a compressor of a gas turbine engine; and,
**FIG. 9** shows another stage in assembling a compressor of a gas turbine engine.

### DETAILED DESCRIPTION

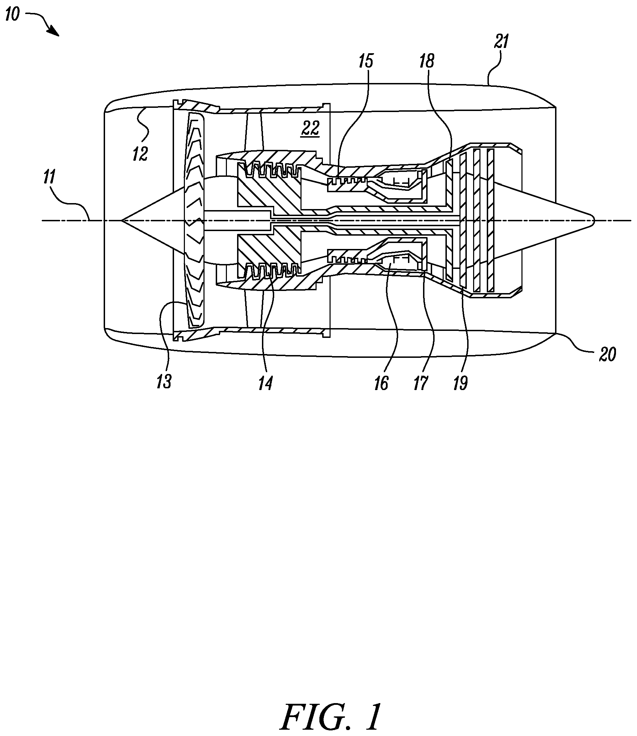

With reference to **FIG. 1****,** a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Gas turbine engines traditionally comprise a series of flanges, the flanges typically coupling either adjacent components, such as the intermediate pressure compressor 14 and high-pressure compressor 15, or adjacent features within that component. For example, the intermediate pressure compressor 14 and / or the high pressure compressor 15 may be multi-stage axial compressors. These multi-stage axial compressors may each comprise a plurality of adjacent casing sections, each mechanically joined to its neighbours via mechanical fixings such as bolts which pass though mating flanges of the adjacent casing sections. Bolts may be secured in either a blind, threaded hole in one of the flanges, or by nuts on the other side of a through-hole through the mating flanges.

Although these flanges may simplify assembly of the multi-stage axial compressor, they, and their associated mechanical fixings, add to the overall mass of the multi-stage axial compressor, and consequently, to the mass of the gas turbine engine which comprises that compressor.

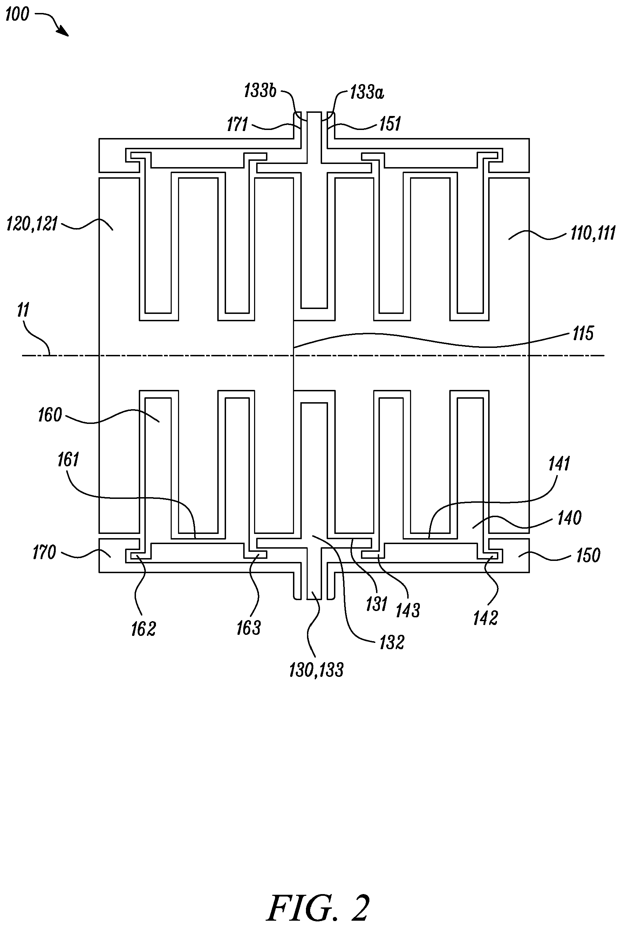

According to a first aspect, **FIG. 2** illustrates an example multi-stage axial compressor 100. The multi-stage axial compressor of FIG. 2 has a smaller number of flanges than is traditionally used to assembly a compressor of a gas turbine engine. It will be appreciated by the skilled person that FIG. 2 represents a schematic of the multi-stage compressor. For example, it does not show details of the rotor blades or a reduction in blade height between successive axial stages of the compressor, as may be expected. However, the schematic of FIG. 2 does show that a single circumferentially-extending flange is used to hold the compressor together, even though the compressor is a multi-stage compressor (having 6 rotor stages in this example).

The multi-stage axial compressor 100 of FIG. 2 comprises a first rotor portion 110, the first rotor portion 110 comprises at least two rotor stages 111, though in the example of

FIG. 2, the first rotor portion comprises three stages. The multi-stage compressor 100 also comprises a second rotor portion 120 that also comprises at least two rotor stages 121, though in the example of FIG. 2, the second rotor portion 120 also comprises three stages. The rotor stages of the first rotor portion and/or the second rotor portion may take any suitable form. For example, a rotor stage may comprise a rotor disc, coupled to a plurality of rotor blades. Alternatively or additionally, a rotor stage may comprise a bladed rotor disc ("blisk"). The first rotor portion 110 is coupled to the second rotor portion 120 at a coupling joint 115. The coupling joint may be any suitable joint. For example, an axially-aligned spline coupling may be used, a curvic coupling may be used.

A stator ring 130 is located axially between adjacent rotor stages of the first rotor portion 110 and the second rotor portion 120. The stator ring 130 comprises a circumferential liner 131, a circumferential stator vane ring 132 and a circumferential support ring 133. In this context "circumferential" means that the related feature extends circumferentially around the engine axis to form a ring type structure. Thus, the circumferential liner 131, by extending circumferentially, surrounds a tip portion of an adjacent rotor stage of the first or second rotor portion when the stator ring is placed adjacent to the first or second rotor portion. The tip clearance of the blades of that rotor stage are therefore determined by the radial clearance between the inner radius of the circumferential liner and blade tips. A radially-inner portion of the circumferential liner may comprise an abradable material, as is known in the art, to accommodate any potential rub between blade tips and liner.

The circumferential stator vane ring 132 comprises a plurality of stator vanes located between adjacent rotors of the first rotor portion 110 and the second rotor portion 120. The circumferential support ring 133 is radially outboard of the circumferential stator vane ring 132 and the circumferential liner 131. The circumferential support ring forms part of a casing assembly of the multi-stage axial compressor. Other parts of the casing assembly include a first casing 150 and a second casing 170.

The first casing 150 surrounds the first rotor portion 110 and a plurality of first stator segments 140 located between rotor stages 111 of the first rotor portion 110 whose tip portions are not surrounded the circumferential liner of the stator ring.

The second casing 160 surrounds the second rotor portion 120 and a plurality of second stator segments 160 located between the rotor stages 121 of the second rotor portion 121.

The first casing comprises a first location feature 151 that interfaces with a first location feature 133a of the circumferential support ring 133 to form a first coupling, while the second casing 170 comprises a second location feature 171 that interfaces with a second location feature 133b of the circumferential support ring 133 to form a second coupling. In the example of FIG 2, the first casing 150, the second casing 170 and the circumferential support ring 133 of the stator ring-130 are located and connected by a bolted flanged joint formed from radially aligned flanges of the first casing 150, second casing 170 and the circumferential support ring 133. The first location feature and the second location feature are formed from the combination of the facing faces of the flange and mechanical fixings, (i.e., nuts and bolts - not shown in FIG. 2) used to secure the components of the casing assembly. Though not shown in the FIGS, circumferential support ring 133 may comprise additional connection features to enable compressor 100 to be connected to other components of the gas turbine engine.

In the example of FIG. 2, stator segments 140, 160 (first stator segments 140 between adjacent rotor stages of the first rotor portion 110 and second stator segments 160 between adjacent rotor stages of the second rotor portion 120) comprise a plurality of stator vanes distributed around the circumference of the rotor. To ease assembly of the multi-stage axial compressor it is advantageous to group multiple circumferentially-adjacent stator vanes together into a stator segment. A stator segment may comprise for example, 2, 3, 4, 5, 10, 20, 30 stator vanes. Other vane numbers are also possible. Each stator segment therefore defines a circumferential arc of stator vanes, with the magnitude of the circumferential arc dependent upon the number of stator vanes comprised within the stator segment and the circumferential spacing between adjacent vanes. A circumferential arc of a stator segment may be between 30 degrees and 180 degrees, i.e., a number of stator segments in a stator row between adjacent rotor stages may be between 2 (180 degree stator arc) and 12 (30 degree stator arc).

In the example of FIG.2, the first stator segments 140 and the second stator segments 160 , respectively each comprise a liner portion 141, 161 that extends axially from successive stator vane stages to cover a tip portion of the rotor blades of an adjacent rotor stage. A radially inwardly facing portion of the liner portion of the first stator segments and the second stator segments may comprise an abradable material (not shown in FIG. 2) to accommodate any potential rub between blade tips and the liner portion.

The circumferential extent of the liner portion may be equal to the circumferential extend of the stator vane portion of the stator segments. The liner portion may be circumferentially aligned with the stator vane portion. Alternatively, the stator vane portion may be circumferentially clocked (i.e., offset) relative to the liner portion.

To reduce any potential aerodynamic penalty caused by gaps between adjacent liner portions, sealing strips may be located between circumferentially-adjacent stator segments; i.e., first sealing strips (not shown in FIG. 2) may be located between circumferentially-adjacent first stator segments, while second sealing strips (not shown in FIG. 2) may be located between circumferentially-adjacent second stator segments. The number of sealing strips used per stator row is equal to the number of seal segments in that stage. In some examples, circumferential end portions of the first stator segments and/ or second stator segments may comprise edge surfaces that lie in a plane that is angled relative to a radial plane of the multi-stage axial compressor. Facing end portions of adjacent stator segments may therefore radially overlay. The sealing strips (if present) may be in a radial gap between facing adjacent seal segments. A location feature, such as a groove, may be provided in one of the facing surfaces to locate each sealing strip.

To locate the segments, each segment may comprise segment location features at axially-opposing ends of the seal segment. These segment location features may be discrete (for example, lugs, tangs, etc.) or continuous (for example, extending along the entire circumferential arc of the segments. These segment location features 142, 143, 162, 163 locate the segments to axially adjacent components (stator ring 130, first casing 150, second casing 170). Axial segment sealing strips (not shown) may be provided in the joints formed between the segments and casings or segments and stator ring portion.

Further reductions in parts count are also envisaged. For example, FIG.2 shows a stator segment arrangement in which the first stator segments 140 comprise a multi-stage arrangement of successive stator stages in which adjacent stator stages of the first stator segments 140 are interconnected by a first rotor tip liner segment 142 that is configured to surround (overlay) a tip portion of a rotor stage of the first rotor portion 110 that is axially bounded by the adjacent stator stages. In the example of FIG. 2, the second stator segments 160 also comprise a multi-stage arrangement of successive stator stages, in which adjacent stator stages of the second stator segment 160 are interconnected by a second rotor tip liner segment that is configured to surround a tip portion of a rotor stage of the second rotor portion that is axially bounded by the adjacent stator stages.

The example of FIG.2 may provide a mass reduction for a multi-stage axial compressor as it reduces the number of flanges required to assemble the multi-stage axial compressor, relative to designs which comprise a plurality of single-stage compressor casing segments, located relative to each other via a series of bolted flanged joints. For example, the 6-stage compressor of FIG.2 uses a single flange, whereas a more conventional 6-stage compressor design may use 6 flanges (one per compressor stage).

Although the above compressor construction has been formulated primarily to ease assembly and reduce weight of a gas turbine engine compressor, this construction also offers potential advantages when optimising compressor tip clearances between a compressor rotor and its casing.

It is desirable to reduce compressor tip clearances, where possible, to increase both the thermodynamic efficiency and operability (i.e., resistance to compressor surge) of the resulting compressor. However, different components of the compressor expand and contract in a radial direction at different rates, for example, depending upon the materials of the components, their location within the compressor and the way the compressor is operated.

Incorporation of a circumferentially-extending flange increases the thickness of the material surrounding the rotor blades, and therefore, tends to damp (reduce) the thermal response rate of that portion of the compressor casing due to a local increase in thermal inertia due to the increased casing thickness. Thus, the response rate of the compressor casing may be significantly influenced by the number and location of the flanges used in its construction, in turn, influencing the build clearances for the compressor over several rotor stages. In other words, the requirement to mechanically joint adjacent parts (for example, corresponding to adjacent compressor stages) of the casing together by flanges may influence the thermal response of the resulting casing assembly, in turn influencing the thermodynamic and / or aerodynamic behaviour of the compressor.

However, by reducing the number of flanges, the magnitude of this effect may be reduced. Furthermore, absence of a compressor flange at an axial location enables the optimisation of the thermal response of the casing at or around that axial location by varying the thickness of the compressor casing to control its thermal mass. Here though, the variation of the thickness of the compressor casing is an independent design input (for tip clearance optimisation) as opposed to a dependent design output (traditionally driven by a requirement to incorporate a flange of sufficient strength to join adjacent casing sections).

Hence, in some examples a thickness of the first casing 150 and / or second casing 170 may undulate (i.e., may vary, may comprise undulations) along an axial extent of the first casing and/or a thickness of the second casing may undulate along an axial extent of the second casing 170. In other words, the outer surfaces 152, 172 of the respective casing 150 and /or second casing 170 may comprise at least one hump and /or at least one depression to locally change casing thickness. The respective inner surfaces of these casings do not comprise undulations and may be substantially circular in cross-section, to reduce circumferential variation in rotor tip clearance. Thus, the reduction in the number of flanges protruding from an outer surface of a casing, permits the thickness of the casing to be optimised for turbomachinery tip clearance control, particularly under transient conditions.

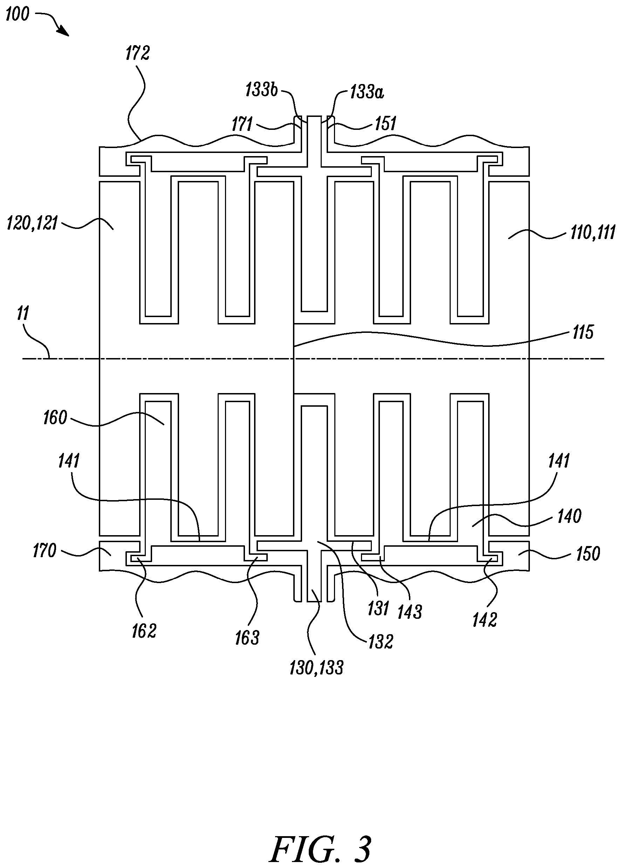

An example of a first casing 150 and second casing 170 comprising undulations 180 along a portion of their respective outer surfaces 152, 172 is shown in **FIG. 3****.** The example casings of FIG. 3 are rotationally symmetric about axis 11. The axial spacing between adjacent undulations of undulations 180 may correspond to an axial spacing between adjacent rotor stages. From FIG. 3, it will be readily understood that undulations in outer surfaces 152, 172 of the respective first casing 150 and second casing 170, cause the thickness of the casing to vary axially. If the undulations vary with the spacing of rotor stages, then the casing thickness will be reduced radially outboard of the rotor stages, and increased between rotor stages. Thus, the thermal response of the casing may be improved as the portions of the casing immediately outboard of the rotor stages have a reduced thermal mass. Additionally, the thicker portions of the casing, (for example, between adjacent rotor stages and radially outboard of stator vanes), may maintain structural stiffness for the overall casing. The undulations may take any suitable form. For example, like FIG. 3, the undulations may vary smoothly (continuously). For example, the undulations may vary in a sinusoidal manner, or in an approximation to a sinusoidal manner. Alternatively, the undulations may vary in a more discrete manner (for example, approximating to a square wave), in which the undulations comprise step changes in casing thickness, such that the outer surface of the casing comprises a discrete series of grooves. The magnitude of the undulations (i.e., variation in casing thickness) may also vary in the axial direction along the outer surface of the compressor casings. There may be several reasons for this. For example, some compressor stages within the compressor may be less sensitive to tip clearance effects than other stages; for example, the portion of the casing surrounding upstream compressor rotor stages may be less subject to variation in temperature due to engine power setting than the portion of the casing surrounding downstream compressor stages.

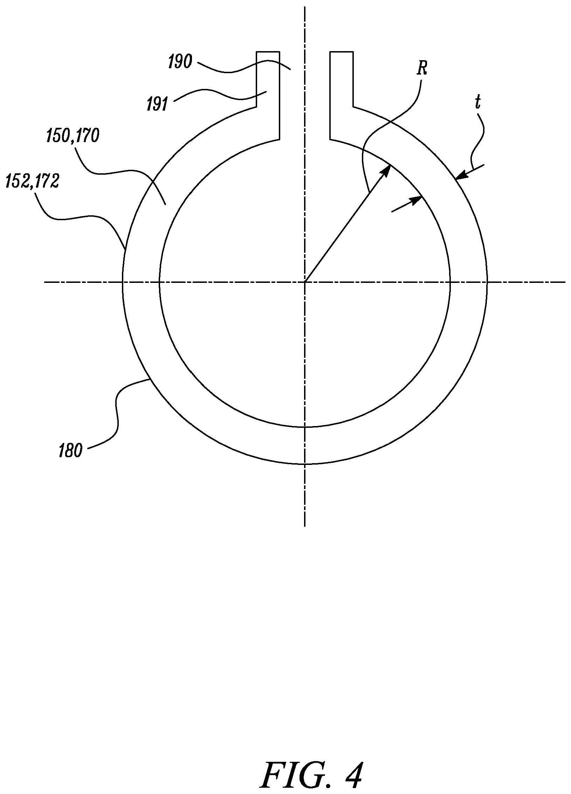

Further modifications are also envisaged. For example, in some compressor designs, a bleed offtake 190 may be taken from the compressor via a bleed offtake port 191. The bleed offtake 190 may provide air to the passenger cabin of an aircraft; the bleed offtake may be a handling bleed for maintaining operation of the compressor away from its surge line; the bleed offtake may be taken for another purpose. The bleed offtake port 191 may not extend around the complete circumference of the compressor but be instead located within a circumferential portion of the compressor. This can cause a circumferential asymmetry in compressor running clearances at or proximal to the axial location at which the offtake is taken, due to an effective increase in thickness of the casing due to the presence of the bleed offtake port. The impact of this asymmetry may be reduced if the thickness, t, of the compressor casing at or proximal to the bleed offtake is varied in a circumferential direction in compensation for this effect, i.e., if the thickness of the first casing undulates along a circumferential extent to the first casing; and/or if the thickness of the second casing undulates along a circumferential extent of the second casing. In some of these examples, the undulation 180 may only extend for a sector of the compressor casing, rather than around the complete circumference. Furthermore, undulations which extend in an axial direction may be superposed (i.e., combined with) undulations which at least partially extend in a circumferential direction to produce a casing thickness that varies both axially and radially to optimise compressor tip clearance control. This axial and/or radial undulation is possible because the number of flanges of the compressor casing is reduced relative to existing designs. A schematic example of a radially-extending undulation 180 around an outer surface 152, 172 of a casing 150, 170 is shown in **FIG. 4****.** In this schematic example, it can be seen that while the inner surface of the casing 150, 170 has a substantially constant radius R, the thickness, t, of the casing is not constant around the circumference of the casing. As such, the casing thickness undulates because the casing thickness increases and then decreases around the circumferential extent of the casing. It will be appreciated that different forms of circumferentially-extending undulations are possible, with the form of these undulations (amplitude, circumferential extent, number of undulations etc) varying in response to the number and type of features (e.g., number of offtake ports, size of offtake ports etc) that form part of the casing.

It will be appreciated that in the above examples, the thickness of the first casing and /or second casing is varied by adding or removing material to the outer surface of the first casing and / or second casing. Material may be removed by any suitable process, for example, by machining. Material may be added by an additive manufacturing process. In examples in which an additive manufacturing process is used to add material, the material added by the additive manufacturing process may be the same as, or different to the material of first casing and / or second casing.

The first casing and / or second casing of the multi-stage compressor may additionally comprise components which are typically either upstream or downstream of a compressor.

For example, an upstream duct may be integral with a compressor casing that surrounds the lower pressure rotor stages of the multi-stage axial compressor. In a multi-compressor gas turbine, such as that illustrated in FIG.1, this duct may feed the multi-stage axial compressor with the discharge from an upstream compressor.

For example, a downstream diffuser may be integral with a compressor casing that surrounds the higher pressure rotor stages of the multi-stage axial compressor. This diffuser may decelerate the outlet air flow from the compressor prior to entry into the combustion chamber of the gas turbine engine.

It will also be appreciated that in the above examples, the components of the gas turbine engine multi-stage axial compressor, particularly the static components of the gas turbine engine multi-stage axial compressor (such as stator segments, stator vane ring, casings) may have complex geometries. These components are therefore ideally suited to an additive layer manufacturing process.

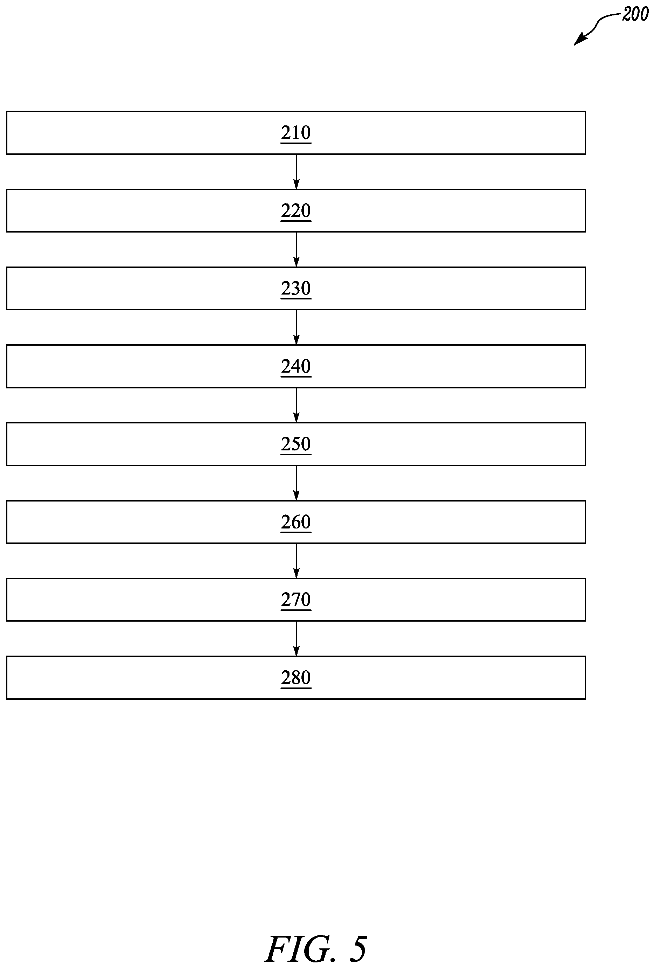

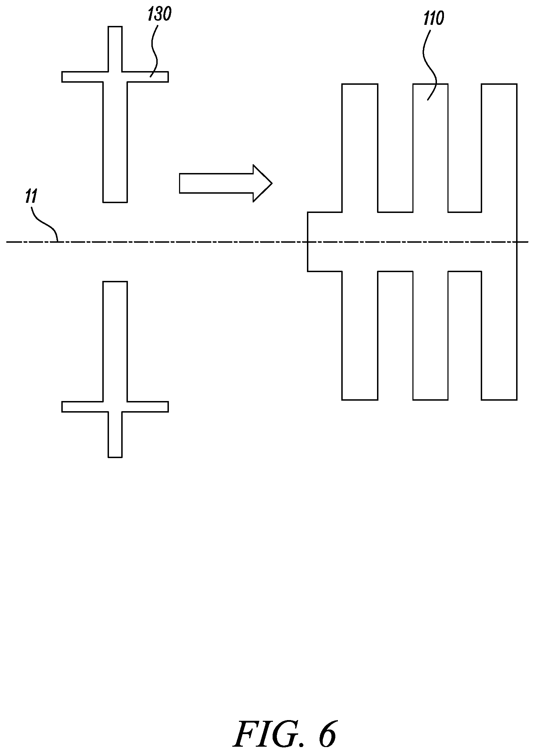

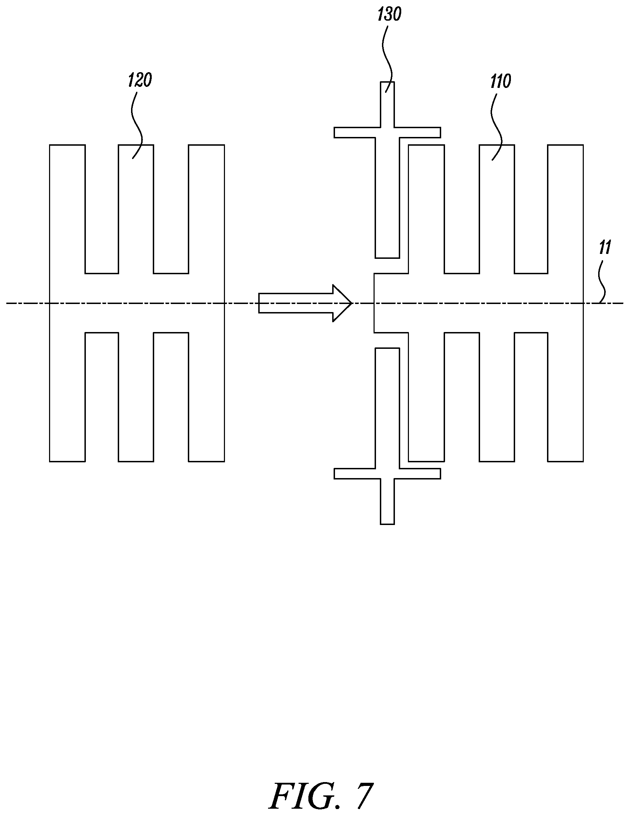

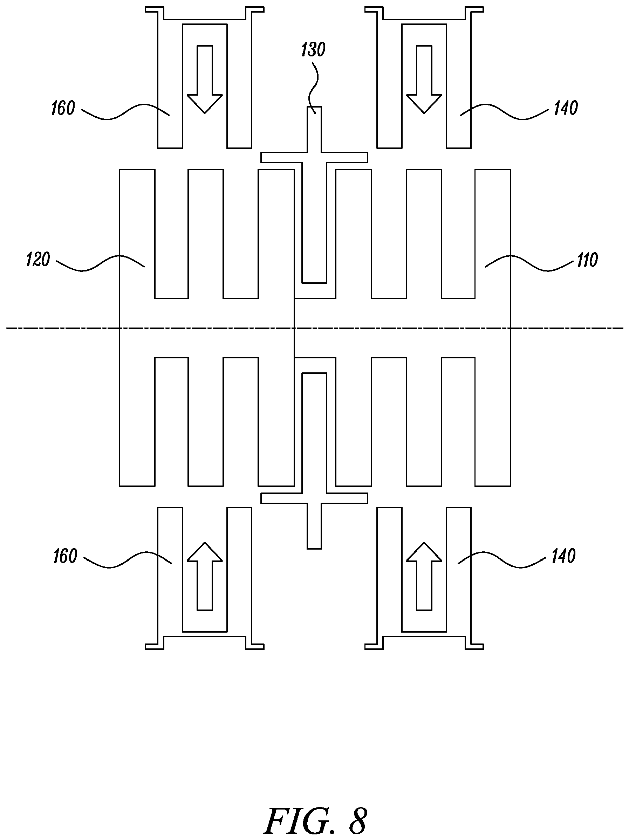

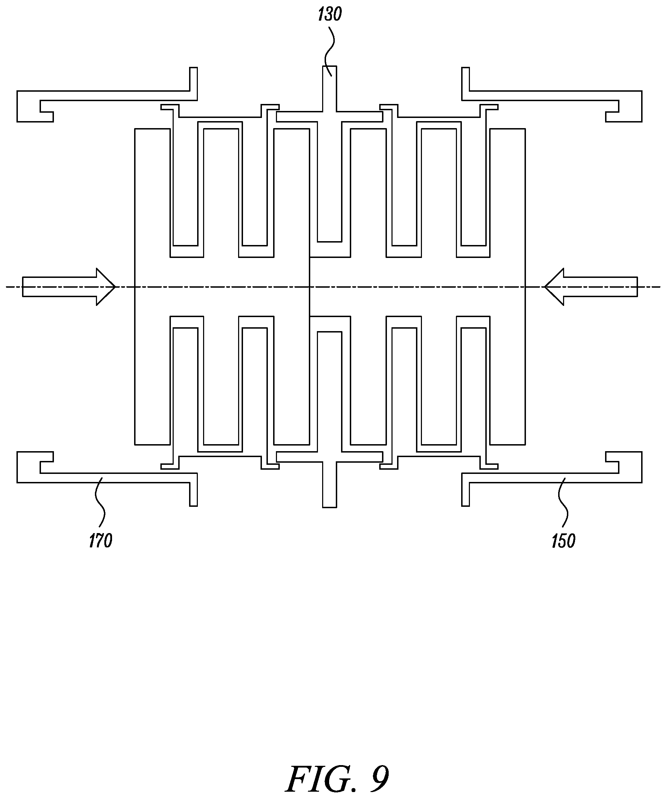

According to a second aspect, there is also disclosed a method of assembling the multi-stage compressor of the first aspect. It will be understood that disassembly of the assembled multi-stage compressor of the first aspect is the reverse process of assembly. The method of assembly may be better understood by reference to **FIGS 5 to 9****,** in which FIG 5 illustrates the steps of the method and FIGS 6 to 9 provide schematic representations of different stages in the assembly process.

Method 200 comprise the following steps: -
In step 210 a first rotor portion is provided. The first rotor portion comprises at least two rotor stages.

In step 220 a stator ring is placed adjacent to the first rotor portion. The stator ring is placed such that it will form an intermediate stator stage within the assembled multi-stage axial compressor. It is placed such that the centre of the stator ring portion is co-axial with the axis of rotation of the first rotor portion.

In step 230 a second rotor portion is connected to the first rotor portion such that the stator ring is positioned axially between the first rotor portion and the second rotor portion and the axis of rotation of the second rotor portion, centre of the stator ring and the axis of rotation of the first rotor portion are coaxial. A splined coupling or curvic coupling may be used to connect the first and second rotor portions.

In step 240 a plurality of first stator segments are placed between rotor stages of the first rotor portion. As previous disclosed, these stator segments may either span across a single compressor stage, or, may alternatively span across multiple compressor stages.

In step 250 a plurality of second stator segments are placed between rotor stages of the second rotor portion. As previous disclosed, these stator segments may either span across a single compressor stage, or, may alternatively span across multiple compressor stages.

In step 260 a first casing is slid over the first rotor portion and first stator segments such that a first location feature of the first casing interfaces with a first location feature of the circumferential support ring of the stator ring.

In step 270 a second casing is slid over the second rotor portion and second stator segments such that a location of the second casing interfaces with a second location feature of the circumferential support ring of the stator ring.

In step 280, the first casing, circumferential support ring and second casing are mechanically coupled together.

Optionally, before step 260 is performed, at least one undulation is formed on an outer surface of the first casing. The at least one undulation may be applied to the outer surface of the first casing by an additive manufacturing process.

Optionally, before step 270 is performed, at least one undulation is formed on an outer surface of the second casing. The at least one undulation may be applied to the outer surface of the first casing by an additive manufacturing process.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A multi-stage axial compressor (100) comprising:
a first rotor portion (110), the first rotor portion (110) comprising at least two rotor stages (111);
a second rotor portion (120), the second rotor portion (120) also comprising at least two rotor stages (121), wherein the second rotor portion (120) is coupled to the first rotor portion (120);
a stator ring (130) axially located between the rotor stages of the first rotor portion (110) and the rotor stages of the second rotor portion (120), the stator ring (130) comprising:
a circumferential liner (131);
a circumferential stator vane ring (132); and
a circumferential support ring (133), radially outboard of the circumferential stator vane ring (132);
a plurality of first stator segments (140) located between the rotor stages (111) of the first rotor portion (110) whose tip portions are not surrounded the circumferential liner of the stator ring;
a first casing (150) surrounding the first rotor portion (110) and first stator segments (140), the first casing (150) comprising a first location feature (151) that interfaces with a first location feature (133a) of the circumferential support ring (133);
a plurality of second stator segments (160) located between the rotor stages (121) of the second rotor portion (120); and
a second casing (170) surrounding the second rotor portion (120) and second stator segments (160), the second casing (170) comprising a second location feature (171) that interfaces with a second location feature (133b) of the circumferential support ring (133); wherein the first casing (150), second casing (170) and circumferential support ring are mechanically coupled together.

2. The multi-stage axial compressor as claimed in claim 1, wherein:
the first stator segments (140) comprise a multi-stage arrangement of successive stator stages, wherein adjacent stator stages of the first stator segments (140) are interconnected by a first rotor tip liner segment (142) that is configured to surround a tip portion of a rotor stage of the first rotor portion (110) that is axially bounded by the adjacent stator stages; and / or
the second stator segments (160) comprise a multi-stage arrangement of successive stator stages, wherein adjacent stator stages of the second stator segment (160) are interconnected by a second rotor tip liner segment that is configured to surround a tip portion of a rotor stage of the second rotor portion that is axially bounded by the adjacent stator stages.

3. The multi-stage axial compressor as claimed in claim 1 or 2, wherein:
a first sealing strip is located between circumferentially-adjacent first stator segments;
and / or,
a second sealing strip is located between circumferentially-adjacent second stator segments.

4. The multi-stage axial compressor as claimed in claim 1 or 2 wherein end portions of the first stator segments and/ or second stator segments comprise edge surfaces lying in a plane that is angled relative to a radial plane of the multi-stage axial compressor.

5. The multi-stage axial compressor as claimed in any preceding claim, wherein the first rotor portion and the second rotor portion are coupled by a spline coupling or a curvic coupling.

6. The multi-stage axial compressor as claimed in any preceding claim, wherein the first casing, circumferential support ring and second casing comprise aligned flanges, the first casing circumferential support ring and second casing being connected by a bolting arrangement through the aligned flanges.

7. The multi-stage axial compressor as claimed in any of claims 1 to 5, wherein:
a first coupling is between the first casing and the support ring;
and,
a second coupling is between the support ring and the second casing.

8. The multi-stage axial compressor as claimed in any preceding claim wherein:
a thickness of the first casing undulates along an axial extent of the first casing; and/or
a thickness of the second casing undulates along an axial extent of the second casing.

9. The multi-stage axial compressor as claimed in any preceding claim wherein:
a thickness of the first casing undulates along a circumferential extent to the first casing; and/or
a thickness of the second casing undulates along a circumferential extent of the second casing.

10. The multi-stage axial compressor of claim 8, wherein
the thickness of the first casing radially outboard of the at least two rotor stages of the first rotor portion is thinner that the thickness of the first casing radially outboard of the adjacent stator segment, and/or,
the thickness of the second casing radially outboard of the at least two rotor stages of the second rotor portion is thinner that the thickness of the second casing radially outboard of the adjacent stator segment.

11. A gas turbine engine comprising the multi-stage axial compressor as claimed in any preceding claim.

12. An aircraft including the gas turbine engine as claimed in claim 11.

13. A method (200) of assembling a multi-stage axial compressor, the method comprising:
providing (210) a first rotor portion, the first rotor portion comprising at least two rotor stages; placing (220) a stator ring adjacent to the first rotor portion;
connecting (230) a second rotor portion to the first rotor portion, the stator ring being positioned axially between the first rotor portion and the second rotor portion;
placing (240) a plurality of first stator segments between the rotor stages of the first rotor portion:
placing (250) a plurality of second stator segments between the rotor stages of the second rotor portion;
sliding (260) a first casing over the first rotor portion and first stator segments such that a first location feature of the first casing interfaces with a first location feature of the circumferential support ring of the stator ring;
sliding (270) a second casing over the second rotor portion and second stator segments such that a location of the second casing interfaces with a second location feature of the circumferential support ring of the stator ring;
mechanically coupling (280) the first casing, circumferential support ring and second casing.

14. The method of claim 13, wherein:
at least one undulation is formed on an outer surface of the first casing prior to sliding the first rotor casing over the first rotor portion and first stator segments; and/or,
at least one undulation is formed on an outer surface of the second casing prior to sliding the second rotor casing over the second rotor portion and second stator segments.

15. The method of claim 14 wherein:
the least one undulation is applied to the outer surface of the first casing by an additive manufacturing process; and / or,
the least one undulation is applied to the outer surface of the second casing by an additive manufacturing process.
